# EUROPEAN PATENT SPECIFICATION

(11) **EP 0 898 754 B1**
(45) Date of publication and mention of the grant of the patent: **09.07.2003**
(21) Application number: 97923195.8
(22) Date of filing: 20.05.1997
(51) Int. Cl.: G06F 17/30

(54) **INFORMATION RETRIEVAL IN CACHE DATABASE**
INFORMATIONSAUFFINDUNGSSYSTEM MIT EINER CACHEDATENBANK
RECUPERATION D'INFORMATIONS D'UNE BASE DE DONNEES CACHE

(30) Priority: 20.05.1996 GB 9610505; 22.05.1996 EP 96303645
(43) Date of publication of application: 03.03.1999
(73) Proprietor: BRITISH TELECOMMUNICATIONS public limited company, London EC1A 7AJ (GB)
(72) Inventor: WEEKS, Richard, Felixstowe, Suffolk IP11 8UG (GB); STEPHENS, Lee Michael, Ipswich, Suffolk IP4 5QT (US); DAVIES, Nicholas John, Colchester, Essex CO4 4SX (GB); REVETT, Mike Charles, Woodbridge, Suffolk IP12 4DL (GB); FLAVIN, Phil Graeme, Felixstowe, Suffolk IP11 9TB (GB)
(74) Representative: Evershed, Michael
(86) International application number: GB9701363
(87) International publication number: WO97044747

(56) References cited:
- US-A- 5 485 609
- PROCEEDINGS, WORKSHOP ON MOBILE COMPUTING SYSTEMS AND APPLICATIONS, 8 December 1994, pages 179-184, XP002016896 KAASHOEK M F ET AL: "DYNAMIC DOCUMENTS: MOBILE WIRELESS ACCESS TO THE WWW"

## Description

The present invention relates to methods and/or systems for accessing information by means of a communication system.

The Internet is a known communications system based on a plurality of separate communications networks connected together. It provides a rich source of information from many different providers but this very richness creates a problem in accessing specific information as there is no central monitoring and control.

In 1982, the volume of scientific, corporate and technical information was doubling every five years. By 1988, it was doubling every 2.2 years and by 1992 every 1.6 years. With the expansion of the Internet and other networks the rate of increase will continue to increase. Key to the viability of such networks will be the ability to manage the information and provide users with the information they want, when they want it.

Navigating the information available over the Internet is made possible by the use of browsers and languages such as Hypertext Markup Language (HTML). For instance, the familiar Worldwide Web (WWW) is an area of the Internet which can be browsed using Hypertext links between documents.

In co-pending international patent application number GB96/00132, published on 1 August 1996 as WO96/23265, there is disclosed a system for accessing information, for instance by means of the Internet, based on a community of intelligent software agents which store meta information about pages on the Internet. The agent-based access system uses keyword sets to locate information of interest to a particular user. It also stores user profiles such that pages being stored by one user can be notified to another whose profile indicates potential interest.

According to a first aspect of the present invention, there is provided an information access system, for accessing information accessible by means of a communications network, the access system comprising:
a) an input for receiving requests for access to items of information;
b) means for downloading requested items of information from the network to local storage; and
c) an information processor for processing downloaded items of information to locate embedded links to other items of information accessible over the network;
wherein said information processor comprises:
(i) a queuing arrangement for queuing downloaded items of information having links embedded; and
(ii) a set of concurrently activatable information acquisition units for downloading items of information identified by said embedded links from the network to local storage,
said information processor, in use, processing a queued item of downloaded requested information to locate links embedded therein which identify other items of information for downloading, and allocating embedded links located in the processed item of information to respective available acquisition units, each acquisition unit then acting to download an item of information identified by the link allocated to it, from the network to the local storage.

An advantage of embodiments of the present invention is that delays in accessing information pages can be reduced. It can also be the case that network traffic is reduced since pages are only retrieved once across the network. Subsequent access by a user can be to the local storage.

Preferably, the local storage comprises more than one cache data store, a first cache data store holding items of information which have been retrieved by the system and a second cache data store holding items of information transferred out of the first cache data store when a user has requested access. The second cache data store can then be managed in a different way from the first, for instance to provide information which is accessed relatively frequently by users.

The first cache data store may for instance be significantly smaller and be "pruned" to hold only information downloaded for links embedded in pages very recently requested by users.

In general, embodiments of the present invention will need monitoring and scheduling capabilities in order to control the queuing process. Otherwise, the queue may become a processing bottleneck.

According to a second aspect of the present invention, there is provided a method of storing items of information accessible by means of a communications network, which method comprises the following steps:
(i) receiving a request for access to an item of information;
(ii) downloading the requested item of information from the communications network and storing the downloaded requested item in a local data store;
(iii) processing the downloaded requested item to locate any links embedded therein referencing other items of information; and
(iv) downloading items of information referenced by embedded links located at step (iii) and storing the downloaded referenced items in said local data store.

An information access system according to an embodiment of the present invention will now be described, by way of example only, with reference to the accompanying Figures, wherein:
Figure 1 shows an environment in which the information access system is supported;
Figure 2 shows a flow diagram of the overall operation of the information access system;
Figure 3 shows a block diagram of the components of a lookahead processor in the information access system of Figure 1;
Figure 4 shows a flow diagram for the process that is provided by the lookahead processor of the information access system;
Figure 5 shows a processing queue and the relevant information acquisition units;
Figure 6 shows the queue and units of Figure 5 after a time interval has passed; and
Figure 7 shows an alternative flow diagram with respect to that of Figure 2.

The specific embodiment of the present invention described below is referred to herein as "Casper", standing for "Cached Access to Stored Pages with Easy Retrieval". The Casper system is particularly designed for accessing WorldWide Web pages provided over the Internet Global Communications network. Other embodiments of the invention of course could however be used to access other information systems where data units ("items of information") have embedded links to other data units.

Information accessible by means of the Web is provided as pages in HTML. Within a document, strings of words or other identifiers may be highlighted. If the user, while viewing a document, selects a highlighted string of words or an identifier, and clicks on it using the mouse button, the highlighted text provides a link to another document. Clicking on the highlighted text triggers the system into calling up the relevant document over the Internet for viewing on the user's screen. It replaces the document the user was previously viewing.

In the above mentioned co-pending patent application, a system is described which can be used to store meta information about pages selected over the Internet by clicking on Hypertext links. By using keywords sets, the system alerts other interested users in a user group of a new document for which meta information has been stored.

In a Casper system, according to an embodiment of the present invention, when a page is selected, for instance to have its meta information stored, the system will automatically review that page for HyperText links to other documents available over the Internet. If there are such links in the document, and the linked documents are not already stored locally, then the Casper system enters the new page to a page processing queue. The links from the page are then allocated to page acquisition software units, as they become available. The linked document for each link in turn is then read into a local "look ahead" cache datastore.

This has the effect of putting together a local store of pages which are clearly related to pages that the user has an interest in. When the user decides to go beyond a page originally accessed, they can simply get the related pages from their local data cache, rather than calling in links on the Internet. This makes information retrieval faster for the user and reduces traffic on the Internet.

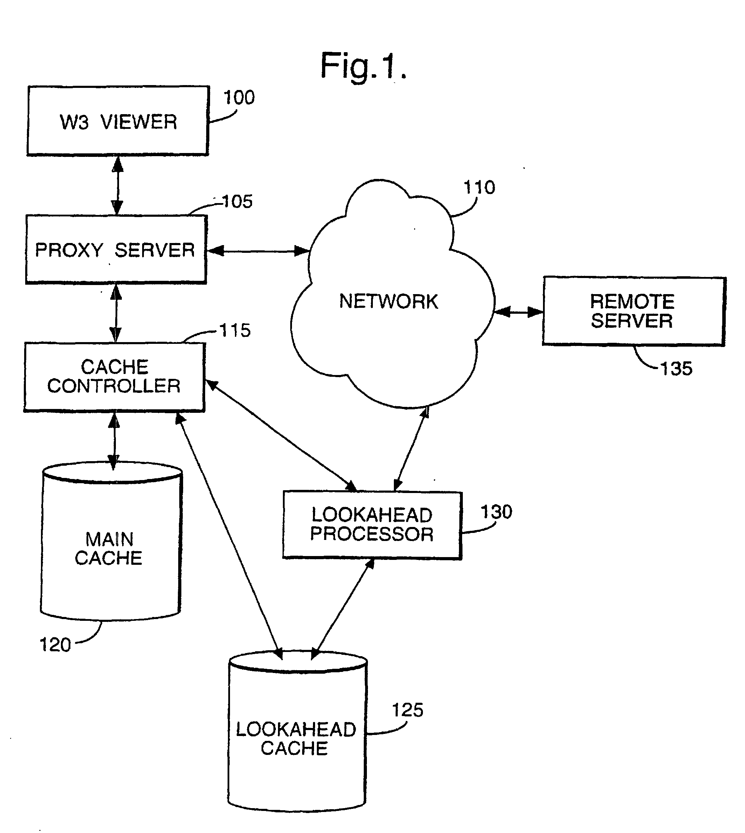

Referring to Figure1, the hardware/software environment which will support embodiments of the present invention comprises the following:
i) a WWW viewer 100 connected via a proxy server 105 to a network such as Internet 110.
ii) main and "lookahead" caches 120, 125 and an associated cache controller 115.
iii) a "lookahead" processor 130 connected between the cache controller 115 and the "lookahead" cache 125, and having direct access to the Internet 110.

The environment supporting Casper is generally of known type. The WWW viewer 100 provides browsing capability in respect of the Internet 110 via the proxy server 105. The proxy server 105 is a known type of software system which can intercept requests for information from users' browsers and process them before passing them on to the information source on the Internet. The main and lookahead caches 120, 125 are local data stores for storing WWW pages and the cache controller 115 provides an interface to them which writes and retrieves pages to and from the caches and logs their contents.

The areas where Casper differs primarily is in the provision of the second cache, the lookahead cache 125, and in the provision of the lookahead processor 130.

It is known to use a caching server, the cache being a temporary store in which for instance pages most recently accessed by a group of users are held. Once the cache is full, pages are removed as more recent ones are added. In Casper, there is the main cache 120 which stores pages accessed by users. There is also however the lookahead cache 125 which stores pages which havn't themselves been accessed but which are linked to pages which have been accessed by users. This lookahead cache 125 is filled by taking the links embedded in pages requested by users and downloading the pages for those links.

These caches 120,125 then come into use when a user requests a page. Casper uses the proxy server 105 to intercept the request in order to make a check first as to whether the page is already in the main cache 120 or the lookahead cache 125. If the page is already present in one of the caches 120, 125, Casper retrieves it from the cache. Otherwise, the relevant information source on the Internet must be contacted after all and the page requested from a remote server 135.

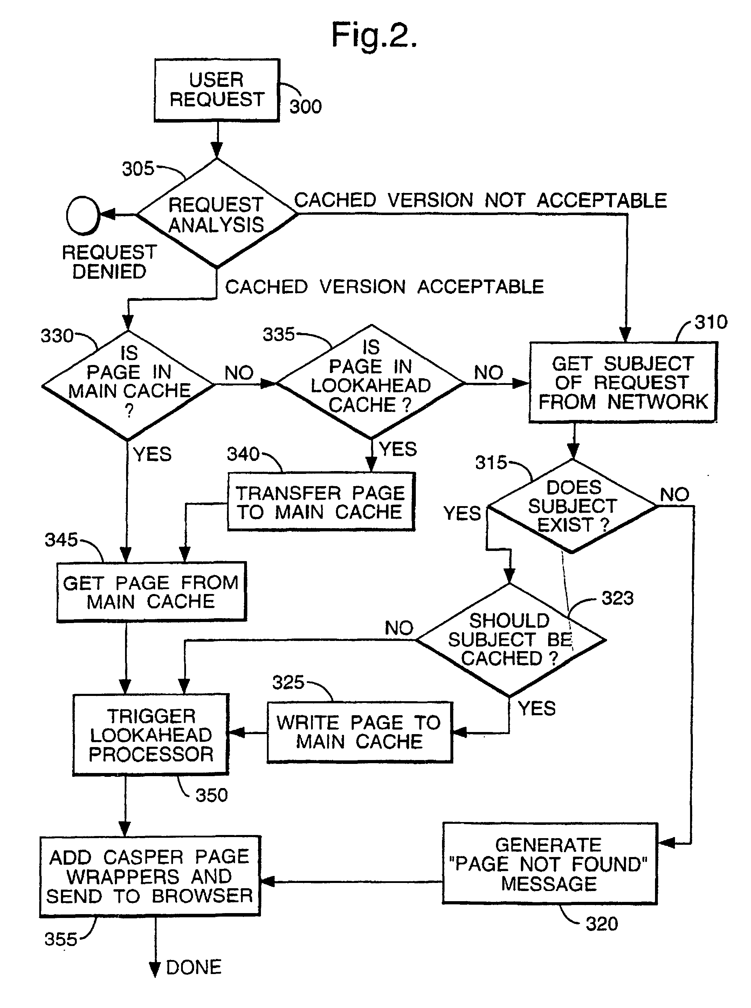

Referring to Figure 2, a flow diagram for the above comprises the following steps:

**STEP 300:** the proxy server 105 of the Casper system receives a user request 300 involving a Universal Resource Locator (URL) at a remote site on the Internet such as a remote server 135. The request may be for one of several alternatives. For instance, the user may be requesting to view a page and/or may be requesting reloading of a page from the relevant remote server 135 for updating purposes. Alternatively, the user may be calling a program which runs dynamically and for which caching would be inappropriate. Where a request for a page is made, it may incorporate an indication that the cached version of the page is unacceptable and that therefore the system will have to deliver the page from the originating remote server 135.

**STEP 305:** in order to determine the nature of the request, and any relevant constraints, the proxy server 105 reviews the user request. The user request can contain optional constraints selected by the user, such as "reload" which means a cached version of a file is not acceptable, but it may also contain embedded constraints, for instance in relation to a URL which it contains. Casper is provided with a configuration file that can specify:
- URLs to be outlawed, for instance because they have dubious content
- URLs that themselves force a network reload, for instance because their content is known to change frequently or because the server involved is local or fast and caching is therefore inappropriate

The request review can therefore take the form of a series of checks such as the following:
- does URL force reload?
- is URL a permitted location?
- has user specified reload?
- has user otherwise specified that a cached version is unacceptable?

Depending on the outcome, the proxy server will move to either of **STEPS 310** or **330.** If the user has clicked on "reload", or the URL forces "reload", then the "cached version not acceptable" path to **STEP 310** is followed. If the URL is not a permitted location, then an "access denied" message is returned to the user and no further processing takes place. Otherwise, the "cached version acceptable" path to **STEP 330** is followed.

**STEP 310:** if at **STEP 305,** it is found that a cached version is not acceptable, the proxy server 105 initiates a connection with the relevant remote server 135. As seen in Figure 1, the proxy server 105 has a direct interface to the Internet 110. In **STEP 315,** the proxy server 105 checks whether the subject of the request exists. If not, in **STEPS 320, 355,** it generates and delivers a message to the user appropriately.

**STEP 323:** if the subject of the request exists, the proxy server 105 checks whether it should be cached. If the subject of the request exists, is an HTML page but caching is not relevant, for instance where Casper's configuration file defines the URL as a forced reload location, then the proxy server will go to **STEPS 350**, 355 to trigger the lookahead processor and send the page to the user's browser. If the subject of the request exists, is an html page and caching is relevant, the proxy server 105 moves to **STEP 325** and writes the relevant page to the main cache 120. The proxy server 105 will then go to **STEPS 350, 355** as above.

It may be the case that neither caching nor lookahead processing is actually relevant, for instance in the case of a program which runs dynamically. In that case, the proxy server 105 can go to **STEPS 350, 355** as above, and the lookahead processor 130 will not find any embedded links to process. On the other hand, an extra check can be made (not shown in Figure 2) as to whether lookahead processing is relevant. If not, then the proxy server 105 could leave out **STEPS 350, 355** and simply deliver the program to the user's browser 100.

**STEP 330:** if at **STEP 305** it is found that caching is relevant, that the user has not specified reload or that a cached version is unacceptable, then the proxy server 105 makes a check via the cache controller 115 whether the subject of the request, usually a Web page, is in the main cache 120. If it is, then the proxy server is ready to go to **STEP 345**.

If a requested Web page is not in the main cache 120, then the proxy server 105 makes a check via the cache controller 115 whether it is already in the lookahead cache 125. If it is, the proxy server 105 moves to **STEP 340** and transfers the page to the main cache 120 and is ready to go to **STEP 345.**

If the requested Web page is not in the lookahead cache 125 either, then the proxy server 105 moves to **STEP 310** and follows the process described above for **STEP 310.**

STEP 345: the proxy server fetches the requested page from the main cache 120 and moves to **STEP 350,** triggering the lookahead processor 130. After triggering the processor, the proxy server 105 moves to **STEP 355** where it adds Casper page wrappers to the requested page(s) and sends them to the user's browser 100.

Meanwhile, as further discussed below, the lookahead processor 130 reviews the requested page(s) to identify embedded links and to access and download to the lookahead cache 125 the pages identified by the embedded links.

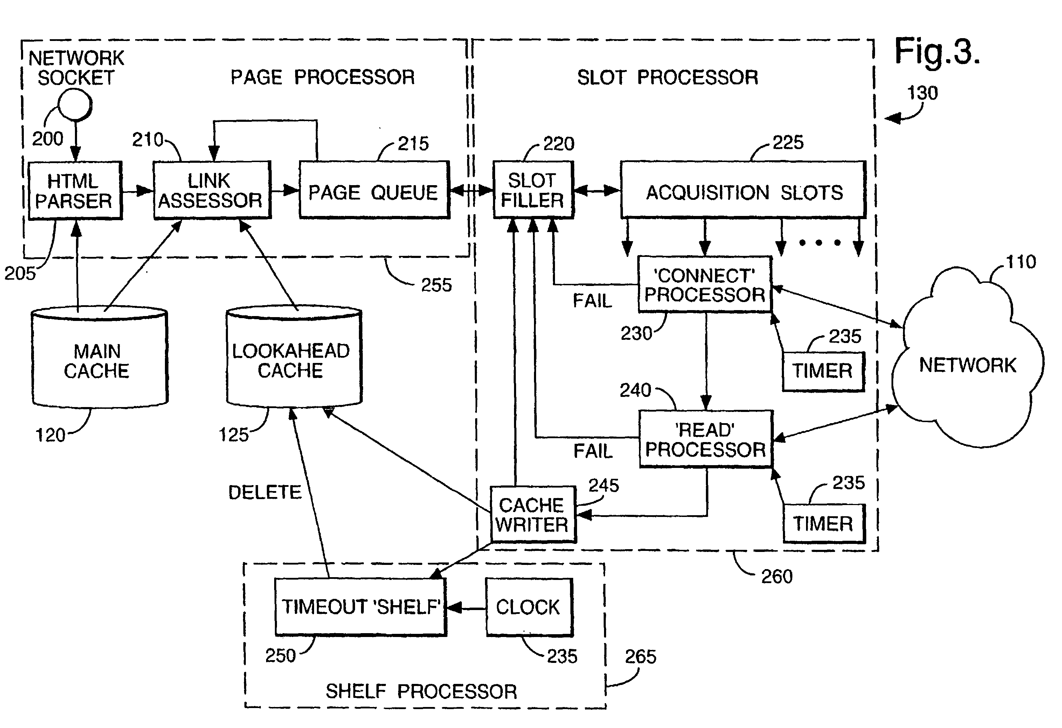

Referring to Figure 3, the lookahead processor 130 comprises software processes and memory, running on a Unix machine. It comprises three asynchronous processes, a page processor 255, a slot processor 260 and a shelf processor 265.

The page processor 255 has a message input 200 for receiving messages that will for instance contain the URL of a page to be processed, an HTML parser 205 for retrieving the contents of a URL and parsing them in sufficient detail to identify all the HTML links embedded, a link assessor 210 for determining which of the identified links need to be "pre-fetched", and a page queue 215 which stores page data for processing as processing requests come in to the message input 200. The parser 205 and the link assessor 210 both have access to the main cache 120, and the link assessor 210 has access to the lookahead cache 125. There is a timer 235 associated with the page queue 215 which marks as "ignore" any links which have been waiting too long (a configurable parameter) for processing. This provides a mechanism for moderating the length of the page queue.

The slot processor 260 has the overall purpose of processing the page data in the page queue 215 as quickly as possible. To that end, it is capable of running a number of Unix sub-processes in parallel, by means of a plurality of aquisition slots 225. It is provided with a slot filler 220 which monitors the status of the slots 225 and attempts to populate any free slots from the page queue 215. Each time a free slot is newly filled, a connect processor 230 is fired off as a Unix sub-process to attempt a connection to the server indicated by a URL in an embedded link. If successful, a read processor 240 reads the relevant page from the server and passes it to a cache writer 245, part of the cache controller 115, which writes the data to the lookahead cache 125 and notifies the shelf processor 265. Both the connect and read processors 230,240 are provided with timing means 235 to avoid aquisition slots 225 being tied up inefficiently.

The shelf processor 265 limits the size of the lookahead cache 125 by removing files after a length of time. It maintains a list of files sent to the lookahead cache 125 by entering file identifiers in time slots in a data store 250 called the "timeout shelf". It is provided with a clock 235 which effectively shifts the time slots through the data store, each time slot triggering deletion of all its associated files from the lookahead cache 125 when it reaches the end of the data store.

The maximum permissible length of the page queue and the number of aquisition slots are intended to be configurable in order to meet operating conditions. To dimension a lookahead processor 130, the considerations discussed below are relevant.

Concerning page queue length, there's no serious penalty in software terms in making the page queue length arbitrarily long. Curtailing its length does however give a measure of control over system performance. The reasoning behind letting pages drop off the end of the queue is that where pages which have got to the end of the queue without being fully processed, the user is anyway likely to have lost interest by that time. There is therefore no point in processing those pages further.

A possible initial strategy would therefore be to start with a short page queue and increase its length until it only rarely overflows. However, if pages are remaining on the queue for too long, more than a minute say, this may be an indication that queue length should be reduced. Alternatively, the number of aquisition slots should be increased; see below.

The matter is complicated somewhat by the fact that there can be two different modes of operation of the lookahead cache, depending on the length of the "shelf", ie the permitted lifetime of pages in the lookahead cache.

If the only purpose of lookahead caching is to give users increased speed of response during their immediate browsing sessions, then there is no point in keeping pages in the cache for more than a few minutes. If pages are kept in the lookahead cache for considerably longer, a few days say, then the possibility arises that the cache will be able to fulfill a second demand for a page. Operating the lookahead cache in this manner would change the above argument for determining page queue length in favour of having a longer queue, since there is value in pre-fetching pages even if it takes several minutes.

With regard to the number of aquisition slots, at the simplest level then the more slots the better. If there are always free aquisition slots, pages can be fetched with the minimum of delay.

In practice, a Unix machine will place a limit on the number of sub-processes permitted. Within this limit, a large number of sub-processes, over twenty say, can be run, since none uses much cpu (central processing unit) or memory resource. Most of the sub-processes' "lives" are spent simply waiting for data to become available.

If the lookahead load is more than one machine can handle, multiple machines can of course be used.

An alternative to multiple sub-processes would be to have multiple threads running within the lookahead processor. This approach would require less operating system overhead and possibly operate more efficiently, but could make maintenance more difficult. The lookahead processor would then be implemented all in one program, rather than in separately maintainable parts. Reliability of the lookahead processor could also be compromised: the multiple sub-process arrangement is tolerant of failure within any of the sub-processes- such failures do not affect the lookahead processor itself which must after all run reliably and continuously.

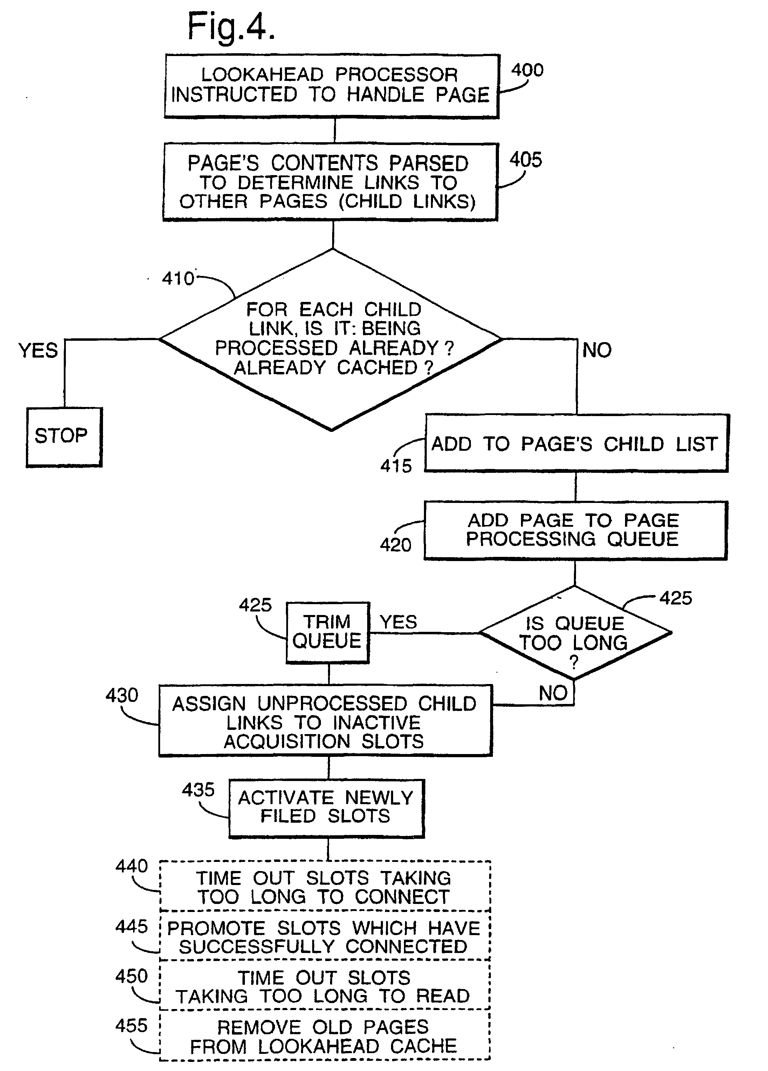

Referring to Figure 4, a flow diagram through the basic operation of the "look ahead processor" can be described as follows:

STEP 400: The proxy server 105 provides a page to the user, either from its main cache or from the Internet, and instructs the look ahead processor 130 to handle the page by transmitting a message to the processor containing the URL for the relevant page.
STEP 405: The look ahead processor 130 gets the URL's contents from the main cache 120 and parses the page's contents to determine the links to other pages.

(That is, it interprets the page's HTML to extract information about the linked pages. This of course requires programmed-in knowledge of HTML syntax.) STEP 410: The existence of the child links so determined is tested against the main cache 120 and the look ahead cache 125.
STEP 415: If a child link is not already cached, and it is not a page or a child page that is already being processed, it is added to the page's child list.
STEP 420: If the page to be processed is determined to have any child links that need to be retrieved, the page is added to the head of the page processing queue. Each entry in the page processing queue 215 has associated with it the page's URL and, for each of the child links, a link URL and link status. This last will be selected from "ignored" if rejected by the link assessor 210, "done" if fully processed, "aborted" if timed out or a slot number if currently processing.
STEP 425: If the page processing queue 215 has grown too long, indicating a processing bottleneck, the last page in the queue is removed, and any outstanding aquisitions associated with its children are aborted.
STEP 430: An attempt is made to process each child of the new page, and any still unprocessed children of other pages in the page queue, by assigning them to inactive page acquisition slots. The slot filler 220 monitors the status of the aquisition slots 225, each of which can have a status of "free", "connecting" or "reading", and populates free slots from the page queue 215, starting with the first unprocessed link in the most recently added page.
STEP 435: Newly-filled page acquisition slots are activated and a "connect processor" 230 is fired off as a Unix sub-process as described above.
STEP 440: Any page acquisition slots that have spent too long attempting to connect, or fail for some other reason, are released and marked inactive, the slot filler 220 being notified.
STEP 445: Any page acquisition slots that have successfully connected to servers 135 are updated from a "connect" state to a " read" state. Reading is achieved by a read processor 240, using the same Unix sub-process as the connect phase. The slot processor 130 reads the relevant child link's data from the network and passes it to a cache writer in the cache controller 115. This writes the data to the lookahead cache 125 and notifies the shelf processor 265.
STEP 450: Any page acquisition slots 225 that have spent too long attempting to read from the servers are released and marked inactive, again notifying the slot filler 220 as in the connect phase.
STEP 455: Pages that have been in the look ahead cache for too long are deemed unwanted and removed from the cache. This is practical since any files which have been accessed by a user after pre-fetching will have been transferred to the main cache 120 by a separate cache controller exercise. Although simplest to trim the lookahead cache 125 by regularly scanning for, and removing, outdated files, this approach consumes significant computing time and incurs high amounts of disc access. It is therefore preferred to use a shelf processor 265 as described above.

The above process steps repeat indefinitely, although not necessarily in the order described. Clearly, steps 440, 445, 450 and 455 in particular can be carried out at a frequency found appropriate in relation to the rest of the process and these steps are shown in dotted outline to indicate they may not be present each time that the lookahead processor 130 is instructed to handle a page.

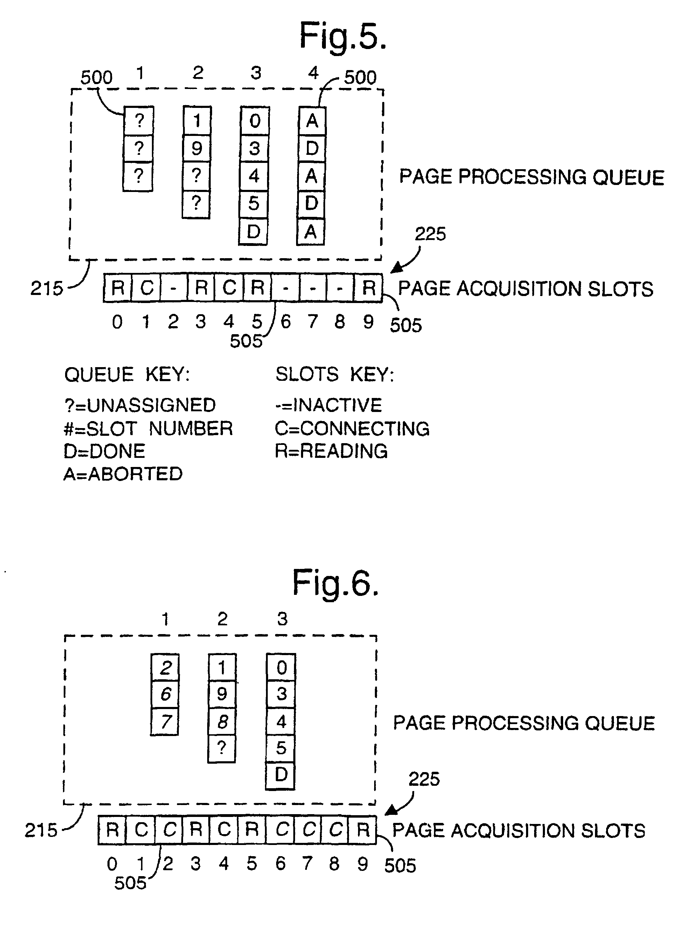

Referring to Figure 5, a real time view of the system could be as shown. In the example, there are four pages 500 in the queue 215 and there are ten individual acquisition slots 505. Assuming that a new page (page 1) has just arrived, and that some acquisition slots 505 have just become free because processing of some children of page 4 has just completed, then some re-allocation of acquisition slots 505 is needed. Page 2 has two of its children being processed. Its other two children are ready for processing but the arrival of the new page 1 may affect what will happen to them. Page 3 has four children processing, one connecting, three already connected and already being read. Page 4 is complete, all its children having either been read or aborted because they were too slow.

The look ahead processor 130 will now assign the children of the newly arrived page 1 to slots 2, 6 and 7, and a child of page 2 to slot 8. Page 4 will be removed from the queue as it has no outstanding operations.

Referring to Figure 6, the results of the re-allocation can be seen.

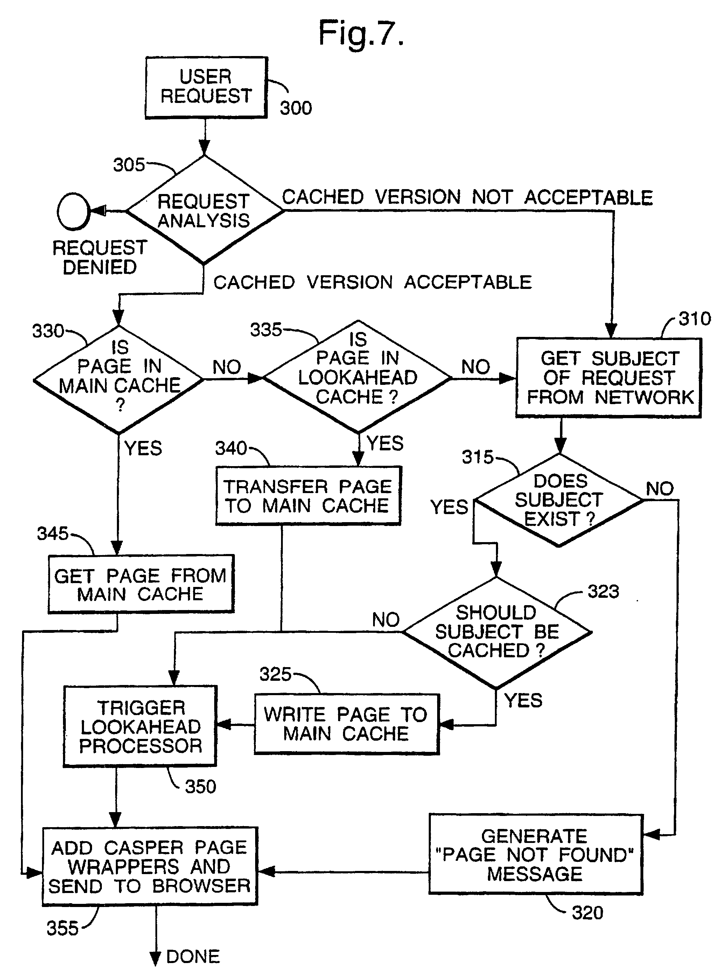

Referring to Figure 7, a slightly different version of the present invention might be found preferable, at STEPS 345, 350, where the system bypasses the lookahead processor 130 in the event that a page is found already in the main cache. This may be preferred if all pages have already been processed by the lookahead processor before loading to the main cache 120.

As a consequence of the above variation, as shown in Figure 7, the system may move directly to trigger the lookahead processor 130, STEP 350, after transferring a page from the lookahead cache 125 to the main cache 120. In this case, at the same time as transferring the page to the main cache, the system will also have to supply the page to the lookahead processor 130.

It would be possible to design embodiments of the invention in object-oriented technology. For instance, at the highest level, the three processors, the page, slot and shelf processors, can be regarded as objects. Each can be an independent entity, communicating with the others via messages rather than by direct data access or modification. At a lower level, the elements of the page queue and the aquisition slots have object-like features: each is an instantiation of a prototype (a page queue element or an aquisition slot) and each has associated data and states.

As described, Casper accesses all pages linked to a selected page. It would be possible to use the principles of the co-pending patent application referenced above and to select the pages accessed according to a user profile based on interests and context for instance.

## Claims

1. An information access system, for accessing information accessible by means of a communications network, the access system comprising:
a) an input for receiving requests for access to items of information;
b) means for downloading requested items of information from the network to local storage; and
c) an information processor for processing downloaded items of information to locate embedded links to other items of information accessible over the network;
wherein said information processor comprises:
(i) a queuing arrangement for queuing downloaded items of information having links embedded; and
(ii) a set of concurrently activatable information acquisition units for downloading items of information identified by said embedded links from the network to local storage,
said information processor, in use, processing a queued item of downloaded requested information to locate links embedded therein which identify other items of information for downloading, and allocating embedded links located in the processed item of information to respective available acquisition units, each acquisition unit then acting to download an item of information identified by the link allocated to it, from the network to the local storage.

2. An information access system according to Claim 1, wherein the local storage comprises at least two cache data stores, a first cache data store to which said acquisition units, in use, download identified items of information, and a second cache data store for storing items of information downloaded in response to a request received at the input.

3. An information access system according to Claim 2, the system further comprising means responsive to the receipt at said input of a request for access to an item of information stored in said first cache data store, to transfer the requested item of information from said first cache data store to said second cache data store.

4. An information access system according to Claim 2 or Claim 3, wherein each received request contains a location indicator indicative of the location of the requested item of information in the network, and the system further comprises a register for storing location indicators together with related constraint data, and means responsive to the receipt at said input of a request for access to an item of information, to access the register to obtain any constraint data stored in relation to a location indicator contained in the received request.

5. An information access system according to any one of the preceding claims, further comprising queue length control means for deleting items of information from the queuing arrangement.

6. An information access system according to Claim 5 wherein the queue length control means are arranged to delete items of information on the basis of the length of time that an item of information has been queued in the queuing arrangement.

7. An information access system according to any one of the preceding claims, further comprising acquisition unit monitoring means for detecting when acquisition units become available and for triggering the allocation of links, located in items of information queued in the queuing arrangement, to available acquisition units.

8. An information access system according to Claim 7, wherein the acquisition unit monitoring means trigger allocation of links in a priority order, the priority order being determined according to the period of time a respective item of information has been queued in the queuing arrangement.

9. An information access system according to Claim 8, wherein a highest level of priority is associated with links located in the item which has been queued in the queuing arrangement for the shortest period of time.

10. An information access system according to any one of the preceding claims wherein the queuing arrangement is arranged to queue each item of information by storing, in respect of the item:
an identifier for the item; and
an identifier for one or more links embedded in the item.

11. An information access system according to Claim 10, wherein the queuing arrangement is further arranged to store status information in respect of each of the link identifiers, in particular a download status for each link indicative of whether or not the respective identified item of information has been downloaded by an information acquisition unit.

12. An information access system according to any one of the preceding claims, the system comprising a proxy server arranged to receive a user request for access to an item of information, to download said requested item of information from the network to the local storage and to trigger operation of said information processor in respect of said downloaded requested item of information.

13. An information access system according to Claim 12 when dependent upon Claim 2, wherein said proxy server is arranged to store said downloaded requested item of information in said second cache data store.

14. An information access system according to Claim 13, wherein said proxy server is further arranged, on receipt of a request for access to an item of information, to access at least one of said first and said second cache data stores to retrieve the requested item of information in preference to downloading the requested item by means of the communications network.

15. A method of storing items of information accessible by means of a communications network, which method comprises the following steps:
(i) receiving a request for access to an item of information;
(ii) downloading the requested item of information from the communications network and storing the downloaded requested item in a local data store;
(iii) processing the downloaded requested item to locate any links embedded therein referencing other items of information; and
(iv) downloading items of information referenced by embedded links located at step (iii) and storing the downloaded referenced items in said local data store.

16. A method according to Claim 15, wherein step (iii) includes queuing downloaded requested items of information by storing, in respect of each item, an identifier for the item and an identifier for each located link embedded therein.

17. A method according to Claim 15 or Claim 16, wherein step (iv) includes allocating embedded links, located at step (iii), to respective acquisition units of a set of concurrently activatable acquisition units, and downloading the items of information associated with the allocated links by means of the acquisition units.

18. A method according to Claim 17 when dependent upon Claim 16, wherein step (iii) further includes storing status information in respect of each identifier for the embedded links, indicating its status in respect of downloading by means of the acquisition units.

19. A method according to Claim 17 or Claim 18, wherein the local data store comprises at least two cache data stores, a first cache data store to which the acquisition units, in use, download identified items of information, and a second cache data store for storing items of information downloaded in response to a request received at the input, the method further comprising the step of:
(v) on receiving a request for access to an item of information stored in the first cache data store, transferring the requested item of information from the first cache data store to the second cache data store.

## Patentansprüche

1. Informationszugriffssystem zum Zugriff auf Informationen, auf die mit Hilfe eines Kommunikationsnetzes zugegriffen werden kann, das umfaßt:
a) einen Eingang zum Empfang von Anforderungen zum Zugriff auf Informationsobjekte,
b) eine Einrichtung zum Herunterladen von angeforderten Informationsobjekten aus dem Netz in einen lokalen Speicher und
c) Informations-Prozessor zum Verarbeiten der heruntergeladenen Informationsobjekte, um eingebettete Verbindungen zu anderen Informationsobjekten, auf die über das Netz zugegriffen werden kann, zu orten,
wobei der Informations-Prozessor umfaßt:
i) eine Warteschlangen-Anordnung zur Anordnung der heruntergeladenen Informationsobjekte mit den eingebetteten Verbindungen in einer Warteschlange und
ii) einen Satz gleichzeitig aktivierbarer Informations-Akquisitionseinheiten zum Herunterladen von Informationsobjekten aus dem Netz in einen lokalen Speicher, die durch die eingebetteten Verbindungen gekennzeichnet sind,
wobei der Informations-Prozessor im Betrieb ein sich in der Warteschlange befindendes Objekt der heruntergeladenen angeforderten Information verarbeitet, um darin eingebettete Verbindungen zu orten, die andere Informationsobjekte zum Herunterladen kennzeichnen, und die im verarbeiteten Informationsobjekt georteten eingebetteten Verbindungen verschiedenen verfügbaren Akquisitions-Einheiten zuordnet, wobei dann jede Akquisitionseinheit tätig wird und ein Informationsobjekt aus dem Netz in den lokalen Speicher herunterlädt, das durch die ihr zugeordnete Verbindung gekennzeichnet ist.

2. Informationszugriffssystem nach Anspruch 1, wobei der lokale Speicher mindestens zwei Cache-Datenspeicher umfaßt, einen ersten Cache-Datenspeicher, in den die Akquisitionseinheiten im Betrieb gekennzeichnete Informationsobjekte herunterladen, und einen zweiten Cache-Datenspeicher zum Speichern von Informationsobjekten, die auf eine am Eingang erhaltene Anforderung heruntergeladen wurden.

3. Informationszugriffssystem nach Anspruch 2, das ferner eine Einrichtung umfaßt, die auf den Empfang einer Anforderung zum Zugriff auf ein Informationsobjekt am Eingang anspricht, das im ersten Cache-Datenspeicher gespeichert ist, um das angeforderte Informationsobjekt vom ersten Cache-Datenspeicher zum zweiten Cache-Datenspeicher zu übertragen.

4. Informationszugriffssystem nach Anspruch 2 oder 3, wobei jede empfangene Anforderung einen Ortungsindikator enthält, der den Ort des angeforderten Informationsobjekts im Netz anzeigt, und das System ferner ein Register zum Speichern der Ortungsindikatoren zusammen mit verwandten begrenzten Daten sowie eine Einrichtung umfaßt, die auf den Empfang einer Anforderung zum Zugriff auf ein Informationsobjekt am Eingang anspricht, um auf das Register zuzugreifen, um beliebige begrenzte Daten zu erhalten, die in bezug auf einen in der empfangenen Anforderung enthaltenen Ortungsindikator gespeichert sind.

5. Informationszugriffssystem nach einem der vorhergehenden Ansprüche, das ferner eine Warteschlangenlängen-Steuereinrichtung zum Streichen von Informationsobjekten aus der Warteschlangen-Anordnung umfaßt.

6. Informationszugriffssystem nach Anspruch 5, wobei die Warteschlangenlängen-Steuereinrichtung so ausgebildet ist, daß sie Informationsobjekte aufgrund der Länge der Zeit streicht, die sich ein Informationsobjekt in der Warteschlangen-Anordnung befindet.

7. Informationszugriffssystem nach einem der vorhergehenden Ansprüche, das ferner eine Akquisitionseinheit-Überwachungseinrichtung umfaßt, die erfaßt, wann Akquisitionseinheiten verfügbar werden, und um die Zuordnung von in Informationsobjekten vorhanden Verbindungen zu verfügbaren Akquisitionseinheiten zu triggern, die sich in der Warteschlangen-Anordnung befinden.

8. Informationszugriffssystem nach Anspruch 7, wobei die Akquisitionseinheit-Überwachungseinrichtung die Zuordnung von Verbindungen in einer Prioritätenfolge triggert, wobei die Prioritätenfolge in Übereinstimmung mit dem Zeitraum bestimmt wird, den sich ein Informationsobjekt in der Warteschlangen-Anordnung befunden hat.

9. Informationszugriffssystem nach Anspruch 8, wobei das höchstes Prioritätsniveau mit den Verbindungen verknüpft ist, die sich in dem Objekt mit der kürzesten Zeit in der Warteschlangen-Anordnung befinden.

10. Informationszugriffssystem nach einem der vorhergehenden Ansprüche, wobei die Warteschlangen-Anordnung so ausgebildet ist, daß sie jedes Informationsobjekt durch objektbezogenes Speichern
- einer Kennung für das Objekt und
- einer Kennung für eine oder mehrere im Objekt eingebettete Verbindungen
in der Warteschlange ordnet.

11. Informationszugriffssystem nach Anspruch 10, wobei die Warteschlangen-Anordnung ferner so ausgebildet ist, daß eine Zustandsinformation in bezug auf jede der Verbindungskennungen, insbesondere den Herunterlade-Zustand für jede Verbindung, gespeichert wird, die anzeigt, ob das jeweilige gekennzeichnete Informationsobjekt durch eine Informations-Akquisitionseinheit heruntergeladen wurde.

12. Informationszugriffssystem nach einem der vorhergehenden Ansprüche, das einen Proxy-Server umfaßt, der so ausgebildet ist, daß er eine Zugriffsanforderung eines Benutzers auf ein Informationsobjekt zum Herunterladen des angeforderten Informationsobjektes aus dem Netz in den lokalen Speicher und zum Triggern der Funktion des Informations-Prozessors in bezug auf das heruntergeladene angeforderte Informationsobjekt empfängt.

13. Informationszugriffssystem nach Anspruch 12, wobei im Fall der Abhängigkeit von Anspruch 2 der Proxy-Server so ausgebildet ist, daß er das heruntergeladene angeforderte Informationsobjekt im zweiten Cache-Datenspeicher speichert.

14. Informationszugriffssystem nach Anspruch 13, wobei der Proxy-Server ferner so ausgebildet ist, daß er beim Empfang einer Zugriffsanforderung auf ein Informationsobjekt bevorzugt vor einem Herunterladen des angeforderten Objekts über das Kommunikationsnetz auf mindestens einen, den ersten oder den zweiten Cache-Datenspeicher zugreift, um das angeforderte Informationsobjekt wiederzugewinnen.

15. Verfahren zum Speichern von Informationsobjekten, auf die mit Hilfe eines Kommunikationsnetzes zugegriffen werden kann, das die folgenden Schritte umfaßt:
i) Empfang einer Anforderung für einen Zugriff auf ein Informationsobjekt,
ii) Herunterladen des angeforderten Informationsobjekts aus dem Kommunikationsnetz und Speichern des heruntergeladenen angeforderten Objekts in einem lokalen Datenspeicher ,
iii) Verarbeiten des heruntergeladenen angeforderten Objekts, um irgendwelche darin eingebetteten Verbindungen zu orten, die sich auf andere Informationsobjekte beziehen, und
iv) Herunterladen von Informationsobjekten, auf die durch eingebettete, im Schritt (iii) geortete Verbindungen verwiesen wurde, und Speichern der heruntergeladenen Objekte im lokalen Datenspeicher.

16. Verfahren nach Anspruch 15, wobei Schritt (iii) umfaßt:
Anordnen der heruntergeladenen angeforderten Informationsobjekte durch Speichern, bezogen auf jedes Objekt, einer Kennung für das Objekt und einer Kennung für jede geortete, im Objekt eingebettete Verbindung in einer Warteschlange.

17. Verfahren nach Anspruch 15 oder 16, wobei Schritt (iv) umfaßt: Zuordnen von eingebetteten Verbindungen, die in Schritt (iii) geortet wurden, zu verschiedenen Akquisitionseinheiten eines Satzes von gleichzeitig aktivierbaren Akquisitionseinheiten und Herunterladen der Informationsobjekte mit den zugeordneten Verbindungen mit Hilfe der Akquisitionseinheiten.

18. Verfahren nach Anspruch 17, wobei im Fall der Abhängigkeit von Anspruch 16 der Schritt (iii) ferner umfaßt: Speichern von Zustandsinformationen in bezug auf jede Kennung der eingebetteten Verbindungen, die ihren Zustand in bezug auf das Herunterladen durch die Akquisitionseinheiten anzeigen.

19. Verfahren nach Anspruch 17 oder 18, wobei der lokale Datenspeicher mindestens zwei Cache-Datenspeicher, einen ersten Cache-Datenspeicher, in den die Akquisitionseinheiten im Betrieb gekennzeichnete Informationsobjekte herunterladen, und einen zweiten Chache-Datenspeicher zum Speichern von Informationsobjekten umfaßt, die aufgrund einer am Eingang erhaltenen Anforderung heruntergeladen wurden, wobei das Verfahren ferner den Schritt umfaßt:
(v) Übertragen des angeforderten Informationsobjekts vom ersten Cache-Datenspeicher zum zweiten Cache-Datenspeicher nach dem Empfang einer Anforderung zum Zugriff auf ein Informationsobjekt, das im ersten Cache-Datenspeicher gespeichert ist.

## Revendications

1. Système d'accès aux informations destiné à accéder à des informations accessibles au moyen d'un réseau de communications, le système d'accès comprenant :
a) une entrée destinée à recevoir des demandes en vue d'un accès à des éléments d'informations,
b) un moyen destiné à télécharger les éléments d'informations demandés depuis le réseau jusqu'à une mémoire locale, et
c) un processeur d'informations destiné à traiter les éléments d'informations téléchargés afin de localiser des liens intégrés vers d'autres éléments d'informations accessibles sur le réseau,
dans lequel ledit processeur d'informations comprend :
(i) un agencement de mise en file d'attente destiné à mettre en file d'attente des éléments d'informations téléchargés ayant des liens intégrés, et
(ii) un ensemble d'unités d'acquisition d'informations pouvant être activées simultanément pour télécharger des éléments d'informations identifiés par lesdits liens intégrés depuis le réseau vers une mémoire, locale,
ledit processeur d'informations, en service, traitant un élément mis en file d'attente des informations demandées téléchargées afin de localiser des liens intégrés dans celui-ci qui identifient d'autres éléments d'informations pour télécharger, et allouer des liens intégrés situés dans l'élément d'informations traité vers les unités d'acquisition disponibles respectives, chaque unité d'acquisition agissant ensuite pour télécharger un élément d'informations identifié par le lien qui lui est alloué, depuis le réseau jusqu'à la mémoire locale.

2. Système d'accès aux informations selon la revendication 1, dans lequel la mémoire locale comprend au moins deux mémoires cache de données, une première mémoire cache de données vers laquelle lesdites unités d'acquisition, en service, téléchargent des éléments d'informations identifiés, et une seconde mémoire cache de données destinée à mémoriser des éléments d'informations téléchargés en réponse à une demande reçue à l'entrée.

3. Système d'accès aux informations selon la revendication 2, le système comprenant en outre un moyen sensible à la réception à ladite entrée d'une demande d'accès à un élément d'informations mémorisé dans ladite première mémoire cache de données, pour transférer l'élément d'informations demandé depuis ladite première mémoire cache de données vers ladite seconde mémoire cache de données.

4. Système d'accès aux informations selon la revendication 2 ou la revendication 3, dans lequel chaque demande reçue contient un indicateur d'emplacement indiquant l'emplacement de l'élément d'informations demandé dans le réseau, et le système comprend en outre un registre destiné à mémoriser des indicateurs d'emplacement en même temps que des données de contrainte apparentées et un moyen sensible à la réception à ladite entrée d'une demande d'accès à un élément d'informations, pour accéder au registre afin d'obtenir une donnée de contrainte quelconque mémorisée en relation avec un indicateur d'emplacement contenu dans la demande reçue.

5. Système d'accès aux informations selon l'une quelconque des revendications précédentes, comprenant en outre un moyen de commande de longueur de file d'attente destiné à supprimer des éléments d'informations de l'agencement de mise en file d'attente.

6. Système d'accès aux informations selon la revendication 5, dans lequel le moyen de commande de longueur de file d'attente est agencé pour supprimer des éléments d'informations sur la base de la durée pendant laquelle un élément d'informations a été placé en file d'attente dans l'agencement de mise en file d'attente.

7. Système d'accès aux informations selon l'une quelconque des revendications précédentes, comprenant en outre un moyen de surveillance d'unités d'acquisition destiné à détecter lorsque des unités d'acquisition deviennent disponibles, et à déclencher l'allocation de liens, situés dans des éléments d'informations mis en file d'attente dans l'agencement de mise en file d'attente, à des unités d'acquisition disponibles.

8. Système d'accès aux informations selon la revendication 7, dans lequel le moyen de surveillance d'unités d'acquisition déclenche l'allocation de liens selon un ordre de priorité, l'ordre de priorité étant défini selon l'intervalle de temps pendant lequel un élément d'informations respectif a été mis en file d'attente dans l'agencement de mise en file d'attente.

9. Système d'accès aux informations selon la revendication 8, dans lequel un niveau le plus élevé de priorité est associé à des liens situés dans l'élément qui a été placé en file d'attente dans l'agencement de mise en file d'attente pendant l'intervalle de temps le plus court.

10. Système d'accès aux informations selon l'une quelconque des revendications précédentes, dans lequel l'agencement de mise en file d'attente est agencé pour placer en file d'attente chaque élément d'informations en mémorisant, en ce qui concerne l'élément :
un identificateur pour l'élément, et
un identificateur pour un ou plusieurs liens intégrés dans l'élément.

11. Système d'accès aux informations selon la revendication 10, dans lequel l'agencement de mise en file d'attente est en outre agencé pour mémoriser les informations d'état par rapport à chacun des identificateurs de liens, en particulier un état de téléchargement pour chaque lien indiquant si l'élément d'informations identifié respectif a été ou non téléchargé par une unité d'acquisition d'informations.

12. Système d'accès aux informations selon l'une quelconque des revendications précédentes, le système comprenant un serveur mandataire agencé pour recevoir une demande d'utilisateur en vue d'un accès à un élément d'informations, pour télécharger ledit élément d'informations demandé depuis le réseau jusqu'à la mémoire locale, et pour déclencher le fonctionnement dudit processeur d'informations par rapport audit élément d'informations demandé téléchargé.

13. Système d'accès aux informations selon la revendication 12 lorsqu'elle dépend de la revendication 2, dans lequel ledit serveur mandataire est agencé pour mémoriser ledit élément d'informations demandé téléchargé dans ladite seconde mémoire cache de données.

14. Système d'accès aux informations selon la revendication 13, dans lequel ledit serveur mandataire est agencé en outre, à la réception d'une demande d'accès à un élément d'informations, pour accéder à au moins l'une desdites première et seconde mémoires cache de données afin de récupérer l'élément d'informations demandé de préférence au téléchargement de l'élément demandé au moyen du réseau de communications.

15. Procédé de mémorisation d'éléments d'informations accessibles au moyen d'un réseau de communications, lequel procédé comprend les étapes suivantes :
(i) recevoir une demande en vue d'un accès à un élément d'informations,
(ii) télécharger l'élément d'informations demandé depuis le réseau de communications, et mémoriser l'élément demandé téléchargé dans une mémoire de données locale,
(iii) traiter l'élément demandé téléchargé afin de localiser tous liens intégrés dans celui-ci, référençant d'autres éléments d'informations, et
(iv) télécharger des éléments d'informations référencés par les liens intégrés localisés à l'étape (iii), et mémoriser les éléments référencés téléchargés dans ladite mémoire de données locale.

16. Procédé selon la revendication 15, dans lequel l'étape (iii) comprend la mise en file d'attente des éléments d'informations demandés téléchargés en mémorisant, par rapport à chaque élément, un identificateur pour l'élément et un identificateur pour chaque lien localisé intégré dans celui-ci.

17. Procédé selon la revendication 15 ou la revendication 16, dans lequel l'étape (iv) comprend l'allocation de liens intégrés, localisés à l'étape (iii), à des unités d'acquisition respectives d'un ensemble d'unités d'acquisition pouvant être activées simultanément, et le téléchargement des éléments d'informations associés aux liens alloués au moyen des unités d'acquisition.

18. Procédé selon la revendication 17 lorsqu'elle est dépendante de la revendication 16, dans lequel l'étape (iii) comprend en outre la mémorisation des informations d'état par rapport à chaque identificateur pour les liens intégrés, indiquant son état par rapport au téléchargement au moyen des unités d'acquisition.

19. Procédé selon la revendication 17 ou la revendication 18, dans lequel la mémoire de données locale comprend au moins deux mémoires cache de données, une première mémoire cache de données dans laquelle les unités d'acquisition, en service, téléchargent des éléments d'informations identifiés, et une seconde mémoire cache de données destinée à mémoriser des éléments d'informations téléchargés en réponse à une demande reçue à l'entrée, le procédé comprenant en outre l'étape consistant à :
(v) à la réception d'une demande d'accès à un élément d'informations mémorisé dans la première mémoire cache de données, transférer l'élément d'informations demandé depuis la première mémoire cache de données jusqu'à la seconde mémoire cache de données.
